# EUROPÄISCHE PATENTANMELDUNG

(11) **EP 1 044 778 A1**
(43) Veröffentlichungstag der Anmeldung: **18.10.2000**
(21) Anmeldenummer: 00890120.9
(22) Anmeldetag: 14.04.2000
(51) Int. Cl.: B29C 39/10, B29C 33/18, B29C 69/00

(54) **Verfahren zur Herstellung von beschichteten bzw. mehrlagigen Gegenständen**

(30) Priorität: 15.04.1999 AT 24699 U
(71) Anmelder: APT Prototypen Produktion Technologie Ges.m.b.H., 8010 Graz (AT)
(72) Erfinder: Rath, Heribert, Ing., 8010 Graz (AT)
(74) Vertreter: Cunow, Gerda

(57) **Zusammenfassung**

Bei einem Verfahren zur Herstellung von beschichteten bzw. mehrlagigen Gegenständen mit einem aus einem Kunststoff bestehenden Basiselement und einer Beschichtung bzw. Folie (3), wird vorgeschlagen, daß die Beschichtung bzw. Folie (3) in bzw. an einer Form bzw. einem Werkzeug (1, 2) angeordnet bzw. festgelegt wird, in der Form bzw. dem Werkzeug (1, 2) auf seine endgültige Gestalt gebracht wird und beim Einbringen eines Kunststoffs für das Basiselement in die Form bzw. das Werkzeug (1, 2) mittels Vakuumgießen oder Hintergießen mit dem Basiselement verbunden wird, wodurch in einem Arbeitsgang unmittelbar ein beschichteter bzw. mehrlagiger Gegenstand herstellbar ist.

## Beschreibung

Die vorliegende Erfindung bezieht sich auf ein Verfahren zur Herstellung von beschichteten bzw. mehrlagigen Gegenständen mit einem aus einem Kunststoff bestehenden Basiselement und einer Beschichtung bzw. Folie.

Zur Herstellung von beschichteten bzw. mehrlagigen Gegenständen, insbesondere von mit einer Folie bzw. Beschichtung versehenen Kunststoff- und Metallbauteilen ist es bekannt, auf derartige Kunststoff- bzw. Metallbauteile nachfolgend Folien bzw. Beschichtungen aufzubringen. Derartige Basiselemente können bei einer Herstellung aus Kunststoff beispielsweise durch ein Spritzgießverfahren hergestellt werden, worauf nachfolgend in einem getrennten Arbeitsgang eine gegebenenfalls vorgeformte Folie aufgebracht wird. Derartige Spritzgießverfahren sind beispielsweise der DE-OS 24 44 267, der EP-A 0 601 272, der DD-A 284 837, der DD-A 202 835, der DE-B 1 194 564 oder der EP-A 0 442 128 zu entnehmen. Nachteilig bei dieser bekannten Vorgangsweise ist die Tatsache, daß nicht nur hohe Werkzeugkosten für die getrennte Herstellung des Basiselements und der gegebenenfalls vorgeformten Folie anfallen, sondern daß auch die erforderlichen, mehrstufigen bzw. mehrgängigen Arbeitsverfahren mit einem entsprechend hohen Arbeitsaufwand verbunden sind. Weiters lassen sich derartige aufwendige Arbeitsverfahren sowie das Erfordernis der Herstellung von gegebenenfalls mehreren Formen bzw. Werkzeugen in ökonomischem Maßstab nicht in einer Prototypen- bzw. Kleinserie einsetzen.

Neben einem derartigen getrennten Aufbringen von Folien auf Basiselemente ist darüber hinaus beispielsweise das Aufbringen von Folien in einem Siebdruckverfahren bekannt, wobei jedoch auch in diesem Fall entsprechende mehrstufige und zeit- und kostenaufwendige Verfahren zum Einsatz gelangten.

Die vorliegende Erfindung zielt nun darauf ab, ein Verfahren der eingangs genannten Art dahingehend weiterzubilden, daß bei entsprechend verringertem Zeit- und Kostenaufwand unmittelbar beschichtete bzw. mehrlagige Gegenstände, insbesondere aus Kunststoff, herstellbar sind, so daß ein derartiges Verfahren auch im Rahmen von Prototypen-Fertigungen bzw. Kleinserien einsetzbar ist. Zur Lösung dieser Aufgabe ist das erfindungsgemäße Verfahren im wesentlichen dadurch gekennzeichnet, daß die Beschichtung bzw. Folie in bzw. an einer Form bzw. einem Werkzeug angeordnet bzw. festgelegt wird, in der Form bzw. dem Werkzeug auf seine endgültige Gestalt gebracht wird und beim Einbringen eines Kunststoffs für das Basiselement in die Form bzw. das Werkzeug mittels Vakuumgießen oder Hintergießen mit dem Basiselement verbunden wird. Dadurch, daß erfindungsgemäß in einer einzigen Form bzw. einem einzigen Werkzeug und somit in einem einzigen Arbeitsgang sowohl die Aufnahme einer Folie bzw. Beschichtung und die Anordnung bzw. Ausgestaltung derselben in ihrer endgültigen Formgebung bzw. Gestalt sowie die Verbindung mit einem Basiselement erfolgt, kann auf das aufwendige Herstellen einer Mehrzahl von Formen bzw. Werkzeugen verzichtet werden. Weiters wird erfindungsgemäß vorgeschlagen, daß unmittelbar beim Einbringen eines Kunststoffs für das Basiselement in die Form bzw. das Werkzeug durch Vakuumgießen oder Hintergießen eine Verbindung mit der Folie bzw. Beschichtung erfolgt, so daß insgesamt die Herstellung eines beschichteten bzw. mehrlagigen Gegenstandes in einem einzigen Arbeitsgang in einer gemeinsamen Form bzw. einem gemeinsamen Werkzeug durchführbar ist, wodurch nicht nur entsprechend geringere Kosten für die Herstellung der Werkzeuge, sondern auch ein entsprechend geringerer Arbeits- und Zeitaufwand erzielbar ist.

Gemäß einer besonders bevorzugten Ausführungsform des erfindungsgemäßen Verfahrens wird vorgeschlagen, daß das Verformen der Folie bzw. Beschichtung und/oder die Herstellung des Kunststoff-Basiselements durch Tiefziehen vorgenommen wird. Durch ein derartiges Tiefziehen durch Anlegen einer Unterdruck- bzw. Vakuumquelle an die Form bzw. das Werkzeug läßt sich nicht nur die Folie bzw. Beschichtung in ihre endgültige Gestalt in Anlage an die Form bzw. das Werkzeug bringen, sondern es kann darüber hinaus auch die Formgebung des aus Kunststoff ausgebildeten Basiselements durch ein derartiges Tiefziehen erfolgen.

Neben der Möglichkeit, die Folie bzw. Beschichtung beispielsweise durch Tiefziehen in ihre endgültige Gestalt zu bringen, kann für eine weitere Verkürzung des Arbeits- und Zeitaufwandes vorgesehen sein, daß die Folie bzw. Beschichtung durch das Einbringen des Kunststoffes für das Basiselement in die Form bzw. das Werkzeug auf seine endgültige Gestalt gebracht wird, wie dies einer weiteren bevorzugten Ausführungsform des erfindungsgemäßen Verfahrens entspricht. Es kann somit bei entsprechender Ausgestaltung bzw. Beschaffenheit der Folie bzw. Beschichtung unmittelbar beim Einbringen des das Basiselement bildenden Kunststoffs gleichzeitig die Formgebung der Folie bei gleichzeitiger Verbindung der Folie mit dem das Basiselement bildenden Kunststoffs erfolgen.

Zur Anpassung an unterschiedliche Einsatzzwecke sowie zur Erzielung von entsprechenden gestalterischen Ausbildungen wird gemäß einer weiters bevorzugten Ausführungsform vorgeschlagen, daß die Folie bzw. Beschichtung vor dem Einbringen in die Form bzw. das Werkzeug beispielsweise mit einem Laser- oder Tintenstrahldrucker bedruckt wird. Durch ein derartiges Bedrucken von Folien, insbesondere unter Verwendung eines Laserdruckers oder eines Tintenstrahldruckers, lassen sich entsprechend unterschiedlich gestaltete Oberflächen des herzustellenden Gegenstandes erzielen.

In dem erfindungsgemäßen Verfahren können darüber hinaus unterschiedliche Ausbildungen von Formen bzw. Beschichtungen eingesetzt werden, wobei gemäß einer weiters bevorzugten Ausführungsform vorgeschlagen wird, daß die Folie bzw. Beschichtung von einer lumineszierenden Folie, einer Elektrolumineszenzfolie, einer Sputterfolie, einer beflockten bzw. strukturierten PVC-Folie oder dgl. gebildet wird. Beispielsweise kann eine lumineszierende Folie bzw. eine Elektrolumineszenzfolie von einem Material gebildet sein, welches durch Anlegen eines elektrischen Feldes einen Lumineszenzeffekt ergibt. Durch Einsatz derartiger beschichteter Gegenstände läßt sich hiebei ein entsprechend gewünschtes, ästhetisches Äußeres, beispielsweise bei Verwendung strukturierter Folien, erzielen.

Insbesondere zur Erzielung entsprechender bzw. abgewandelter gestalterischer Effekte bzw. zur Anpassung an unterschiedliche Einsatzzwecke wird gemäß einer weiters bevorzugten Ausführungsform vorgeschlagen, daß die Folie bzw. Beschichtung mehrlagig ausgebildet wird, wobei in diesem Zusammenhang besonders bevorzugt vorgeschlagen wird, daß eine zum Kunststoff-Basiselement gewandte Lage der Folie bzw. Beschichtung Leiterbahnen, Lichtleiter oder anorganische bzw. organische Designelemente, wie beispielsweise Holz, Kork, Papier, Metall etc., integriert enthält. Durch Integration von Leiterbahnen bzw. Lichtleitern in eine derartige mehrlagige Beschichtung können derartige beschichtete bzw. mehrlagige Gegenstände gemäß der Erfindung für unterschiedlichste Einsatzzwecke adaptiert werden. Weiters läßt sich durch die erfindungsgemäß vorgeschlagene Aufnahme von Designelementen in eine derartige Folie ein entsprechendes, gewünschtes ästhetisches Äußeres, beispielsweise zur Herstellung von Einrichtungsgegenständen, Verkleidungen, beispielsweise im Gerätebau oder Fahrzeugbau, oder dgl. erzielen. Für das Einbringen bzw. die Integrierung derartiger Designelement kann gemäß einer weiters bevorzugten Ausführungsform vorgesehen sein, daß vor dem Einbringen des Kunststoffes für das Basiselement die Designelemente auf die Folie bzw. Beschichtung insbesondere durch Einblasen bzw. Tiefziehen aufgebracht bzw. integriert werden.

Für eine einfache und sichere Festlegung der Beschichtung bzw. Folie an bzw. in der Form oder dem Werkzeug wird gemäß einer besonders bevorzugten Ausführungsform des erfindungsgemäßen Verfahrens vorgeschlagen, daß die Folie bzw. Beschichtung durch Anlegen eines Unterdrucks bzw. Differenzdrucks und/oder durch Verwendung von Halterändern bzw. -kanten und/oder von Haltenadeln bzw. -bolzen in bzw. an der Form bzw. dem Werkzeug gehalten bzw. festgelegt wird. Derart läßt sich eine sichere Halterung der Folie bzw. Beschichtung in der Form bzw. dem Werkzeug erzielen, wobei bei entsprechender Ausbildung der Form insbesondere in ihrem Randbereich eine sichere Festlegung über entsprechende Halteränder oder Kanten bzw. durch an der Form bzw. dem Werkzeug vorgesehene Haltenadeln bzw. -bolzen erzielbar ist. Alternativ oder zusätzlich kann erfindungsgemäß die Festlegung und Halterung der Folie bzw. Beschichtung durch Anlegen eines Unterdrucks bzw. Differenzdrucks unterstützt werden bzw. erfolgen.

Für eine ordnungsgemäße Verbindung des Kunststoff-Basiselements mit der Folie bzw. Beschichtung in einem einzigen Arbeitsgang während der Ausbildung des Kunststoff-Basiselements wird gemäß einer weiters bevorzugten Ausführungsform vorgeschlagen, daß das Kunststoff-Basiselement aus Duroplasten, wie beispielsweise Polyurethan, Epoxyharzen oder dgl., gebildet wird, wobei im Zusammenhang mit einer Ausbildung, gemäß welcher die Folie bzw. Beschichtung aus Thermoplasten, insbesondere aus Polyethylen, Polypropylen oder dgl., gebildet wird bzw. diese enthält, wie dies einer weiteren bevorzugten Ausführungsform entspricht, insbesondere verhindert, daß durch das Einbringen bzw. Ausbilden des aus Kunststoff bestehenden Basiselements eine Beschädigung bzw. Zerstörung der Folie bzw. Beschichtung resultiert.

Die Erfindung wird nachfolgend anhand von in der beiliegenden Zeichnung schematisch dargestellten Formen bzw. Werkzeugen mit einem Ausführungsbeispiel zur Durchführung des erfindungsgemäßen Verfahrens näher erläutert. In dieser zeigen:
Fig. 1 eine schematische Schnittansicht durch eine erste Ausführungsform einer Form bzw. eines Werkzeugs zur Durchführung des erfindungsgemäßen Verfahrens;
Fig. 2 in einer zu Fig. 1 ähnlichen Darstellung eine abgewandelte Ausführungsform einer Form bzw. eines Werkzeugs zur Durchführung des erfindungsgemäßen Verfahrens; und
Fig. 3 ebenfalls in einer zu Fig. 1 ähnlichen Darstellung eine weitere abgewandelte Ausführungsform einer Form bzw. eines Werkzeugs zur Durchführung des erfindungsgemäßen Verfahrens.

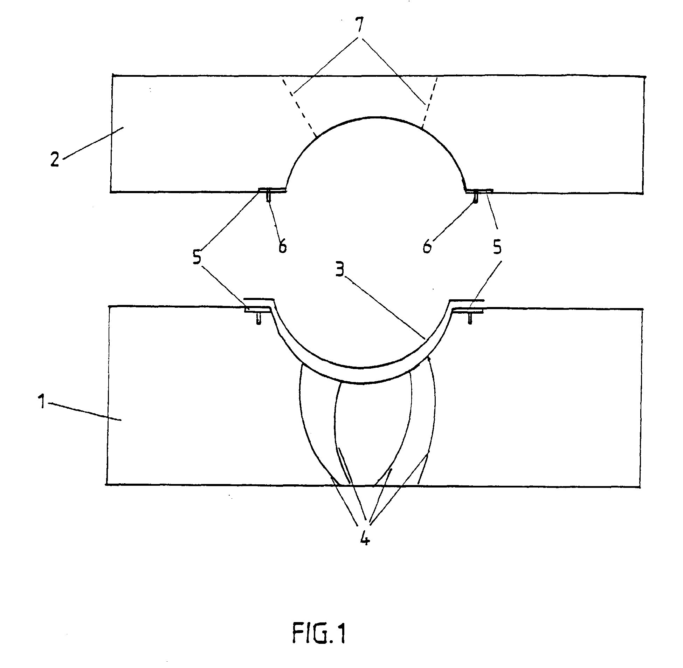

In Fig. 1 sind mit 1 und 2 zwei Teile bzw. Elemente einer Form bzw. eines Werkzeugs bezeichnet, wobei an dem Element 1 vor dem Schließen der Form bzw. des Werkzeugs eine schematisch mit 3 bezeichnete Folie bzw. Beschichtung angeordnet wird. Die Folie bzw. Beschichtung 3 wird in dem Element 1 durch Anlegen eines Unterdrucks über schematisch mit 4 angedeutete Vakuumleitungen gehalten. Alternativ oder zusätzlich können in den jeweils mit 5 bezeichneten Randbereichen der Formteile 1 und 2 entsprechende Halteränder oder auch zusätzliche Haltebolzen 6 vorgesehen sein, welche bei einem Schließen der aus den Elementen 1 und 2 bestehenden Form eine sichere Festlegung der Folie bzw. Beschichtung 3 gegebenenfalls mit Unterstützung durch den über die Leitungen 4 angelegten Unterdruck ergeben.

Anstelle oder zusätzlich zu einem Anlegen eines Unterdrucks über Vakuumleitungen 4 kann für ein Anlegen der Folie bzw. Beschichtung 3 an die Innenkontur des Elements 1 über schematisch und strichliert mit 7 angedeutete Leitungen im Element 2 ein höherer Druck eingebracht werden, so daß durch Ausbilden eines Differenzdrucks ein sicheres Anliegen der Beschichtung bzw. Folie 3 an der durch das Element 1 definierten Innenkontur erhalten wird.

Anschließend wird in an sich bekannter Weise in die Form der Kunststoff für das Basiselement beispielsweise durch ein Vakuumgießen bzw. Hintergießen eingebracht, so daß insgesamt in einem Arbeitsgang ein beschichteter bzw. mehrlagiger Gegenstand herstellbar ist, wobei auf einem Basiselement aus Kunststoff unmittelbar während der Herstellung in der Form eine Verbindung mit der Folie bzw. Beschichtung 3 erfolgt.

Als Werkzeugmaterial können neben Silikon Duroplaste oder Metalle oder Kombinationen dieser Materialien zum Einsatz kommen.

Für die Folie bzw. Beschichtung 3, welche während des Einbringens des Kunststoffs für das Basiselement auch bei Verformung und Erwärmung ihre volle Funktionstüchtigkeit, selbst bei Berücksichtigung von gegebenenfalls in der Folie 3 integrierten Elementen, behalten muß, werden Thermoplaste, insbesondere Polyethylen, Polypropylen oder dgl., vorgeschlagen. Für eine ordnungsgemäße Verbindung mit derartigen Folien bzw. Beschichtungen 3 werden für das Basiselement Duroplaste, insbesondere Polyurethan oder Epoxyharze, vorgeschlagen.

Zur Erzielung entsprechender gestalterischer Effekte kann die Folie bzw. Beschichtung 3 vor dem Einbringen in die Form bzw. das Werkzeug 1, 2 mit an sich bekannten Techniken, beispielsweise mittels eines Laser- oder Tintenstrahldruckers, bedruckt werden oder es können auch entsprechende Strukturen, wie beispielsweise eine Holzmaserung, Ledernarben oder dgl., entweder getrennt oder unmittelbar mit dem Tiefziehverfahren zum endgültigen Formen der Folie bzw. Beschichtung 3 ausgebildet werden.

Neben entsprechenden gestalterischen Ausbildungen der Oberfläche der Folie kann die Folie bzw. Beschichtung 3 auch mehrlagig ausgebildet sein bzw. integriert Leiterbahnen, Lichtleiter oder anorganische bzw. organische Designelemente integriert enthalten.

Das Kunststoff-Basiselement wird in der Form durch an sich bekannte Verfahren, beispielsweise durch ein Vakuumgießen oder ein Hintergießen hergestellt und unmittelbar mit der Folie 3 verbunden.

Für die Folie bzw. Beschichtung 3 kann eine lumineszierende Folie, eine Elektrolumineszenzfolie, eine Sputterfolie oder zur Erzeugung von strukturierten bzw. texturierten Oberflächen eine beflockte bzw. strukturierte PVC-Folie eingesetzt werden. Bei Verwendung einer lumineszierenden Folie 3 ergibt sich unmittelbar ein entsprechender Leuchteffekt, während bei Verwendung einer Elektrolumineszenzfolie durch Anlegen eines elektromagnetischen Felds ein Leuchteffekt erzielt werden kann.

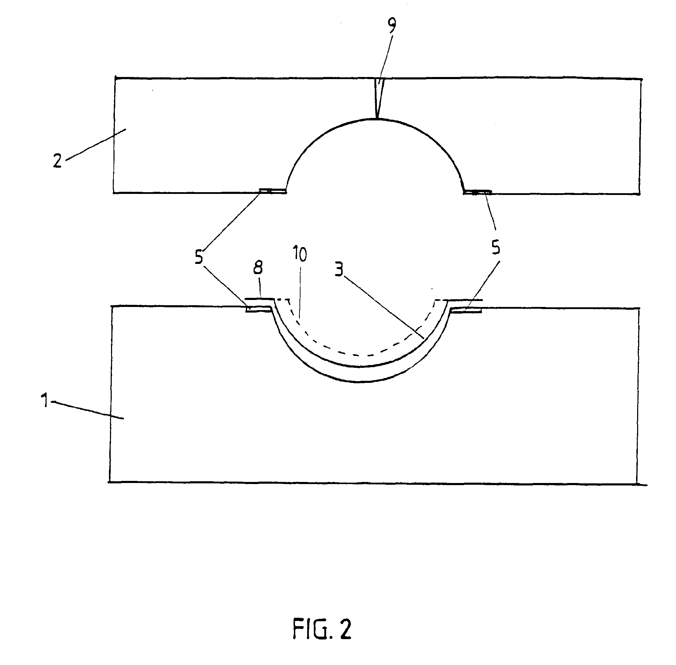

Bei der abgewandelten Ausführungsform gemäß Fig. 2 findet eine Folie bzw. Beschichtung 3 Verwendung, welche über Seitenränder 8 bei einem Schließen der Elemente 1 und 2 an diesen Seitenrändern 8 gehalten wird. Durch entsprechende Ausbildung bzw. Formgebung der Folie bzw. Beschichtung 3 ist ein Anlegen eines Unterdrucks bzw. Differenzdrucks ähnlich wie bei der Ausführungsform gemäß Fig. 1 für ein Anliegen an der Innenkontur des Elements 1 nicht erforderlich. Darüber hinaus ist in Fig. 2 schematisch eine Einbringöffnung 9 für den in weiterer Folge das Basiselement ausbildenden Kunststoff angedeutet, welcher durch ein Vakuumgießen bzw. Hintergießen unmittelbar mit der Folie bzw. Beschichtung verbunden wird. Hiebei ist strichliert und schematisch in Fig. 2 die Außenkontur des Basiselements nach dem Gießvorgang mit 10 angedeutet, wobei der Übersichtlichkeit halber das für die Formgebung der Innenkontur des Basiselements 10 zu verwendende Einsatzstück des Werkzeugs bzw. der Form nicht dargestellt ist.

Nach einer Fertigstellung des Basiselements 10 sowie der unmittelbar damit verbundene Folie bzw. Beschichtung 3 können die Randbereiche 8 entfernt werden, um einen entsprechenden beschichteten bzw. mehrlagigen Kunststoffgegenstand zu erhalten.

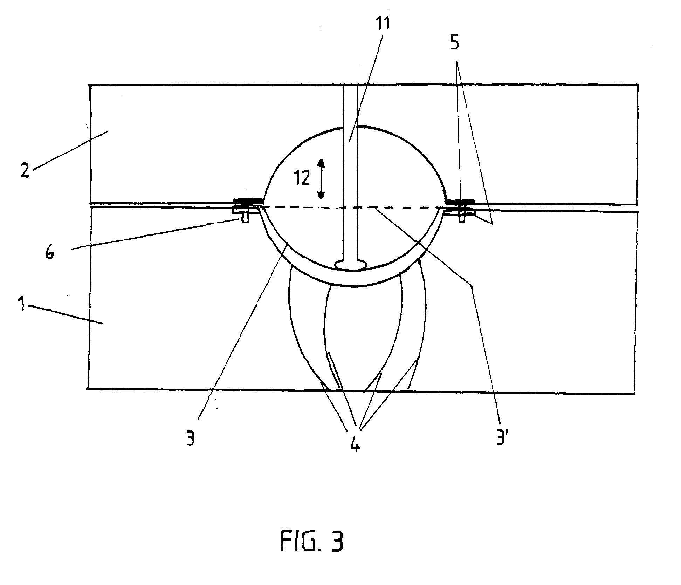

Bei der abgewandelten Ausführungsform gemäß Fig. 3 findet eine Folie bzw. Beschichtung 3 Verwendung, welche in ihrem Ursprungszustand eine im wesentlichen ebene Form aufweist, wie dies in Fig. 3 schematisch mit 3' strichliert angedeutet ist. Zur Erzielung der gewünschten Kontur bzw. für ein Anlegen an die Innenkontur des Elements 1 findet ein Festklemmen von Seitenrändern über entsprechende Haltebolzen bzw. Halteelemente 5 und 6 statt, wobei darüber hinaus in dem Element 2 ein zusätzlicher Haltebolzen 11 vorgesehen ist, welcher bei einem Schließen der Elemente 1 und 2 ein Anliegen der Folie bzw. Beschichtung 3 in die mit durchgezogenen Linien gezeigte Form ergibt. Der Haltebolzen 11 kann hiebei entsprechend dem Doppelpfeil 12 verschiebbar im Element 2 angeordnet sein. Darüber hinaus kann zur Unterstützung wiederum über Vakuumleitungen 4 ein Unterdruck bzw. Vakuum angelegt werden.

Das mit der Folie bzw. Beschichtung 3 zu verbindende Basiselement 10, welches durch Vakuumgießen bzw. Hintergießen mit Kunststoff durch Vorsehen eines entsprechenden Einsatzes in der Form ausgebildet wird, ist in den Fig. 1 und 3 nicht dargestellt, da in Fig. 1 die Form in geöffnetem Zustand vorliegt und in Fig. 3 der geschlossene Zustand vor dem Einbringen des Kunststoffes für das Basiselement 10 angedeutet ist. Demgegenüber zeigt Fig. 2 die geöffnete Form nach Herstellung des mehrlagigen bzw. beschichteten Gegenstands.

## Patentansprüche

1. Verfahren zur Herstellung von beschichteten bzw. mehrlagigen Gegenständen mit einem aus einem Kunststoff bestehenden Basiselement (10) und einer Beschichtung bzw. Folie (3), dadurch gekennzeichnet, daß die Beschichtung bzw. Folie (3) in bzw. an einer Form bzw. einem Werkzeug (1, 2) angeordnet bzw. festgelegt wird, in der Form bzw. dem Werkzeug (1, 2) auf seine endgültige Gestalt gebracht wird und beim Einbringen eines Kunststoffs für das Basiselement (10) in die Form bzw. das Werkzeug (1, 2) mittels Vakuumgießen oder Hintergießen mit dem Basiselement (10) verbunden wird.

2. Verfahren nach Anspruch 1, dadurch gekennzeichnet, daß das Verformen der Folie bzw. Beschichtung (3) und/oder die Herstellung des Kunststoff-Basiselements (10) durch Tiefziehen vorgenommen wird.

3. Verfahren nach Anspruch 1 oder 2, dadurch gekennzeichnet, daß die Folie bzw. Beschichtung (3) durch das Einbringen des Kunststoffes für das Basiselement (10) in die Form bzw. das Werkzeug (1, 2) auf seine endgültige Gestalt gebracht wird.

4. Verfahren nach einem der Ansprüche 1 bis 3, dadurch gekennzeichnet, daß die Folie bzw. Beschichtung (3) vor dem Einbringen in die Form bzw. das Werkzeug beispielsweise mit einem Laser- oder Tintenstrahldrucker bedruckt wird.

5. Verfahren nach einem der Ansprüche 1 bis 4, dadurch gekennzeichnet, daß die Folie bzw. Beschichtung (3) von einer lumineszierenden Folie, einer Elektrolumineszenzfolie, einer Sputterfolie, einer beflockten bzw. strukturierten PVC-Folie oder dgl. gebildet wird.

6. Verfahren nach einem der Ansprüche 1 bis 4, dadurch gekennzeichnet, daß die Folie bzw. Beschichtung (3) mehrlagig ausgebildet wird.

7. Verfahren nach Anspruch 6, dadurch gekennzeichnet, daß eine zum Kunststoff-Basiselement (10) gewandte Lage der Folie bzw. Beschichtung (3) Leiterbahnen, Lichtleiter oder anorganische bzw. organische Designelemente, wie beispielsweise Holz, Kork, Papier, Metall etc., integriert enthält.

8. Verfahren nach Anspruch 7, dadurch gekennzeichnet, daß vor dem Einbringen des Kunststoffes für das Basiselement (10) die Designelemente auf die Folie bzw. Beschichtung (3) insbesondere durch Einblasen bzw. Tiefziehen aufgebracht bzw. integriert werden.

9. Verfahren nach einem der Ansprüche 1 bis 8, dadurch gekennzeichnet, daß die Folie bzw. Beschichtung (3) durch Anlegen eines Unterdrucks bzw. Differenzdrucks und/oder durch Verwendung von Halterändern bzw. -kanten (8) und/oder von Haltenadeln bzw. -bolzen (5, 6, 11) in bzw. an der Form bzw. dem Werkzeug (1, 2) gehalten bzw. festgelegt wird.

10. Verfahren nach einem der Ansprüche 1 bis 9, dadurch gekennzeichnet, daß das Kunststoff-Basiselement (10) aus Duroplasten, wie beispielsweise Polyurethan, Epoxyharzen oder dgl., gebildet wird.

11. Verfahren nach einem der Ansprüche 1 bis 10, dadurch gekennzeichnet, daß die Folie bzw. Beschichtung (3) aus Thermoplasten, insbesondere aus Polyethylen, Polypropylen oder dgl., gebildet wird bzw. diese enthält.
